# EUROPEAN PATENT APPLICATION

(11) **EP 4 647 417 A1**
(43) Date of publication of application: **12.11.2025**
(21) Application number: 24175288.0
(22) Date of filing: 10.05.2024
(51) Int. Cl.: C05G 5/12, C05C 3/00, C05C 9/00, C05D 5/00, C05D 9/02, C05F 3/00, C05F 11/08, C05G 5/30, A01N 25/12, A01N 25/22, A01N 25/30, A01N 63/22, A01N 63/27

(54) **BIOFERTILIZER GRANULE**

(71) Applicant: Earth Alive Clean Technologies Inc., Montréal, Québec H2Z 1S4 (CA)
(72) Inventor: TOUSSAINT, Claudia, Montréal, H2Z 1S4 (CA); NEUFELD, Simon, Montréal, H2Z 1S4 (CA); SAFINA, Gulnaz, Montréal, H2Z 1S4 (CA)
(74) Representative: Calysta NV

(57) **Abstract**

Biofertilizer granule comprising a core and a coating, said core comprises at least one fertilizer chosen in the group comprising inorganic fertilizer, organic fertilizer, biofertilizer, and their mixture, said coating comprises at least a binding agent and a soil activator composition having an extended shelf-life duration and comprising from 91.8 to 99.8 weighty of at least one lignosulfonate salt with respect to the total weight of the soil activator composition, from 0.2 to 8.2 weight % of a bacterial mixture with respect to the total weight of the soil activator composition, said bacterial mixture containing at least 3 different bacteria species with one or more nitrogen fixing bacteria species and one or more phosphorus solubilizing bacteria species, and containing at least 263 million (2.63×10⁸) cfu total bacteria /g soil activator composition after said extended shelf life measured according to ASTM-D5465-93 (dated 1998) standard.

## Description

The present invention relates to a biofertilizer granule comprising a core and a coating, said core comprises at least one fertilizer chosen in the group comprising inorganic fertilizer, organic fertilizer, biofertilizer, and their mixture, said coating comprises at least a binding agent and a soil activator composition having an extended shelf-life duration.

Fertilizing the soil aims to prepare it as well as possible for the cultivation of plants. Some soils are naturally more fertile than others. However, even nutrient-rich soils will eventually become depleted if they are intensively cultivated for many years without adequate fertilization.

It has been identified that plants in general need 16 essential nutrients grouped according to the relative amount of each that plants need.

Plant nutrients can be divided into three main classes :
- The primary or macronutrients usually required in largest amounts, which are for example carbon (C), hydrogen (H), oxygen (O), nitrogen (N), phosphorus (P) and potassium (K),
- The secondary nutrients needed in moderate amounts compared to the primary essential nutrients, which are for example calcium (Ca), magnesium (Mg), sulfur (S),
- The micronutrients, which are for example boron (B), chlorine (CI), copper (Cu), iron (Fe), manganese (Mn), molybdenum (Mo), zinc (Zn),
- Other micronutrients that could be needed by few plants are cobalt (Co), nickel (Ni), silicon (Si), sodium (Na), vanadium (V).

The use of fertilizers to fertilize the soil improves the growth of the plants and can increase the level of nutrients in the soil. There are different types of fertilizers: inorganic fertilizers, organic fertilizers, biofertilizers and their mixture.

Inorganic fertilizers are made of substances of mineral origin. Some of them are produced by exploiting natural deposits such as crushed rocks like lava dust, serpentine and basaltic powder. Others are synthesized through chemical reactions.

These inorganic fertilizers can be straight fertilizers for example nitrogen (N) fertilizer, phosphorus (P) fertilizer, potassium (K) fertilizer, or compound fertilizers for example nitrogen-phosphorus (NP) fertilizer, nitrogen-potassium fertilizer (NK), phosphorus-potassium fertilizer (PK) or nitrogen-phosphorus-potassium fertilizer (NPK), or complex fertilizers for example NPK + S (nitrogen-phosphorus-potassium fertilizer with addition of sulfur), NPK + MgO + B (nitrogen-phosphorus-potassium fertilizer with addition of magnesium oxide and boron).

Organic fertilizers are of animal, plant or human origin, and sometimes two (animal and plant) or all three. Organic fertilizer of animal origin often comes from industrial waste. Examples include ground horn, compost tea, guano, feathers, urea, hoof and bone meal, dried blood, fresh and composted manure and fish meal. Organic fertilizer of plant origin is composted plant waste (by worms or by micro-organisms), algae, compost tea, plant extracts, pelletized plant biomass, green manure (solid or semi-solid) or other decoctions. Organic fertilizer of human origin includes for example sewage sludge, industrial waste such as paper crumble, and urban compost.

Biofertilizers are microorganism-containing substances that, when added to soil, increase fertility and promote plant growth. The microorganisms have the capacity to enhance plant nutrient uptake by multiplying in the rhizosphere, the region of soil surrounding plant roots, and making the nutrients more easily available to plant root. Biofertilizers generally comprise bacterial biofertilizers, fungal biofertilizers, algal biofertilizers, actinomycetes biofertilizers.

Since the action of biofertilizers depends on the viability of the microorganisms they contain, it is important to ensure the stability and the capacity of these microorganisms to form bioavailable nutrients for the plant. The stability of these microorganisms is strongly dependent on the type of biofertilizers, i.e. a liquid biofertilizer or a solid biofertilizer with respectively a liquid formulation or a solid formulation.

Generally speaking, bio-fertilizers are, without being limited thereto, desired to be as ecological as possible not only with respect to their formulation, but also in their manufacturing and transportation. The demand for bio-fertilizers with the least ingredients is growing, and therefore improved shelf-life becomes more and more important.

First of all, there is clearly a desire to reduce spoiling and waste from the user, and accordingly, the user want to make sure that they can use the bio-fertilizer over an extended period of time, i.e. for several applications in one crop or even over several cropping seasons (or multiple plantings over several years).

Further, in bio-fertilizers, the microorganisms are the active ingredients. Microorganisms are responsible for rendering the nutrients available to the plant. They fix the atmospheric nitrogen, solubilize the phosphorus to make it usable by the plant by their metabolic action, and thus must be living micro-organisms. It is therefore highly important for the microorganisms to remain alive or to be able to revive and show the expected metabolic action after extended storage.

Within the meaning of the present invention, the term "Shelf-life of X months" is not only directed to formulations which are not degraded over a period of X months, but also directed to formulations in which the micro-organisms are kept alive or able to be revived after the storage during X months, i.e. able to show their metabolic action and to form colonies in an agar culture medium.

Liquid formulations can contain nutrients, special cell protectants or chemical substances that promote the formation of resting spores or cysts to increase the microorganisms' stress tolerance and stability. Liquid formulations are temperature tolerant, and some have demonstrated a shelf life of about 2 years but require high investments for production unit.

Document US2022/0213003 relates to biofertilizers that are readily compatible with standard fertilizers and common agricultural practices. The disclosed liquid agricultural formulations comprise living microorganisms and an elevated concentration of a chelating agent in order to increase shelf-life duration to about 2 years. According to this document, accelerated aging shelf-life test approximating storage at room temperature for 2 years leads to a 10-fold loss in viable cells compared to the first day.

According to document US2022/0213003, a range of commercial biofertilizer formulations are available on the market, with different strategies having been employed to try to ensure viability of the microorganisms of the biofertilizer. These strategies include optimization of dry biofertilizer formulations and liquid biofertilizer formulations. They explain that with dry biofertilizer formulations, a carrier is used as a vehicle for the microorganisms which plays a role in maintaining the viability of the microorganisms, thereby affecting the shelf-life of the biofertilizer formulation. To date, most dry biofertilizer formulations have a shelf life of about 6 months or less.

They also report that liquid biofertilizer formulations have demonstrated greater shelf-lives of up to about 2 years. However, process costs associated with the production of a liquid biofertilizer formulation are significantly higher than with a dry formulation, but there is a need for inexpensive liquid biofertilizers having a shelf life that extends beyond a single growing season.

Document US2022/0213003 also expresses that many liquid biofertilizers are immiscible in standard phosphate fertilizers and/or form a precipitate when combined with standard phosphate fertilizers (e.g., 10-34-0 liquid fertilizer). Most biofertilizers used in larger-scale agriculture are not the primary fertilizer used, and are rather a supplement to, or partial replacement of, a standard fertilizer. If the biofertilizer is not compatible with the standard fertilizer and common practices, they are unlikely to be adopted by farmers. That's the reason why the liquid formulations according to US2022/0213003 should be biofertilizers that are readily compatible with standard fertilizers and common agricultural practices.

In the context of green or organic agriculture, liquid biofertilizers are on the other hand perceived as inappropriate, despite their increased shelf life. Indeed, liquid biofertilizers imply increased transportation and storage of water to reach their final destination which could be considered environmentally detrimental. Further, the cell protectants and the chemical substances that are used to increase the shelf-life of the biofertilizers also increase the number of ingredients which may prevent the use of the bio-fertilizer in biological agriculture or to obtain certifications like "Ecocert".

In contrast, solid formulations are typically perceived as more ecological and sustainable, since they do not involve water transportation, but typically show a reduced shelf-life. Indeed, solid formulations are dependent on the carrier that will contain the microorganisms. It has been broadly perceived that the utilization of a sterile carrier offers a few favorable features compared to nonsterile ones. Other factors influence the stability of the microorganisms in a solid formulation such as moisture, the drying speed of the microorganisms during the fabrication process, the temperature during the storage of the formulation. The longest stability of the microorganisms is obtained by a dry product containing slow dried microorganisms stored at low temperature (4°C). S. K. Barolia mentions this in his review article in the International Journal of Current Microbiology and Applied Sciences. Of course, storing a dry product at low temperature does not appear as a practical or feasible way to increase the shelf-life of a bio-fertilizer aiming to have a positive ecological impact. Accordingly, solid based formulations have the advantages of being typically cheap, easy to produce but have a lower shelf life of around 6 months.

The challenge in making a solid formulation readily available is also to ensure that it is highly soluble. Indeed, although the use of solid formulation is more advantageous in terms of transport, both in terms of volume and mass to be transported, the use of solid biofertilizer implies the need for dissolution before its application on the plants.

As it can be understood from the aforementioned, there is therefore a need for solid formulation of bio-fertilizers, which are ecological and sustainable in use and manufacturing.

Document EP3110776 discloses solid formulations containing micro-organisms which can be used for remediation of soils or as biofertilizer. The solid fertilizer compositions comprise a cellulose nutrient component and a selection of bacteria. Unfortunately, the document is silent on the stability over time of the microorganisms and contains a series of micronutrients, macronutrients, binders, substrate and at least two species of micro-organisms, such as fungi (2 or more strains) and bacteria (5 different strains).

Document WO2015/157865 discloses a solid biofertilizer comprising lignosulfonate and microorganisms to improve the growing of plants, strengthen the structure and development of the root system and shoot the plant or crop root system. Some nutrients can also be added according to this document. The preferred lignosulfonate is ammonium lignosulfonate and is typically either tetrabutylammonium lignosulfonate and/or phenyl trimethylammonium lignosulfonate.

The aforementioned solid formulations of biofertilizers are certainly promising but they still contain many different ingredients without targeting an extended shelf life.

It is an object of the invention to provide a biofertilizer granule comprising a core and a coating, said core comprises at least one fertilizer chosen in the group comprising inorganic fertilizer, organic fertilizers, biofertilizer, and their mixture, said coating comprises at least a binding agent and a soil activator composition having an extended shelf-life duration comprising:
- From 91.8 to 99.8 weight% of at least one lignosulfonate salt with respect to the total weight of the soil activator composition,
- From 0.2 to 8.2 weight % of a bacterial mixture with respect to the total weight of the soil activator composition, said bacterial mixture containing at least 3 different bacteria species with one or more nitrogen fixing bacteria species and one or more phosphorus solubilizing bacteria species, and containing at least 263 million (2.63×10⁸) cfu total bacteria /g soil activator composition after said extended shelf life measured according to ASTM-D5465-93 (dated 1998) standard,
wherein said lignosulfonate salt is at least one amongst sodium lignosulfonate, calcium lignosulfonate, wherein said extended shelf life of said soil activator composition is higher than or equal to 2 years, preferably higher than or equal to 3 years.

In a preferred embodiment of the present invention, said biofertilizer granule presents a size guide number between 60 and 1000.

According to the present invention, it was surprisingly possible to achieve a biofertilizer granule, preferably having a size guide number between 60 and 1000, with a core comprising at least one fertilizer (inorganic and/or organic and/or biofertilizer) which is coated on its surface by at least a binding agent and a soil activator composition with a bacterial mixture showing an extended shelf life of at least 2 years and even up to 3 years after which said bacterial mixture still contains at least 263 million (2.63×10⁸) cfu/g of soil activator composition and having an environmental footprint as low as possible by providing a very few amount of ingredients.

By the terms "size guide number" it is understood by the present invention the average particle diameter of said biofertilizer granules in millimetres (mm) multiplied by 100. Accordingly the diameter of the "average particle" of said biofertilizer granule of the present invention is comprised between 0.6 mm and 10 mm.

In a particularly advantageous way, it has thus been possible to formulate a biofertilizer granule, more precisely a biofertilizer granule with a coating from a soil activator composition in which the mixture of bacteria unexpectedly and surprisingly has an extended shelf life of at least 2 years and even up to 3 years.

Thus, and advantageously, the production of a bio-fertilizer granule according to the present invention is made more ecologically and is more sustainable in use and manufacturing.

Indeed, industrials or manufacturers of fertilisers finally have the possibility of manufacturing a biofertilizer while limiting the ecological impact and the carbon footprint of their overall manufacturing processes, since the use of said soil activator composition in form of a powder according to the present invention makes it possible to first, limit the transport and storage of water currently required in liquid biofertilizers in the state of the art.

Moreover, industrials or manufacturers of fertilisers in the form of granular biofertilizers can now, thanks to the soil activator composition according to the invention, second, limit and considerably reduce their manufacturing costs for granular biofertilizers. In fact, as explained above, the soil activator composition contains a bacterial mixture with an extended shelf life of up to 2 and preferably 3 years, which means that such manufacturers/industrials can purchase and transport larger quantities of solid soil activator composition and store this powder for a longer period of time, limiting the purchase, transport and storage of water, which must be avoided at all costs in order to justify the ecological aspect, and finally being able to manufacture the biofertilizer granule according to the present invention, directly on site, while retaining flexibility with regard to the quantity of material used and the moment of manufacture, since it is possible to conserve and store said soil activator composition while retaining the benefit of the bacterial mixture.

Furthermore, the addition of a coating comprising said soil activator composition to form a biofertilizer granule according to the present invention increase the value of the product, efficiency and availability of nutrients for the plant.

In particular, the soil activator composition of the coating of said biofertilizer granule according to the present invention comprises one major component which is a sodium and/or calcium lignosulfonate, i.e. a lignosulfonate bearing as counter ion calcium or sodium up to a level between 91.8 wt% to 99.8 wt% beside the bacterial mixture.

Without fully understanding why, it turned out that the choice of the inventors to select a lignosulfonate bearing a counter ion chosen between sodium and calcium offers an environment to the bacterial mixture of the soil activator composition allowing easy revival even after two or three years shelf life up to a level of at least 263 million (2.63×10⁸) and more preferably at least 500 million (5×10⁸) cfu/g of soil activator composition, without using mandatorily a series of nutrients, cell protectants, or buffering ingredients.

Indeed, contrary to document WO2015/157865 or EP3110776, which disclose formulation containing cell protectant or buffering ingredient like calcium bicarbonate and accordingly showing potentially a more detrimental environment footprint or creating difficulties to reach a bio-fertilizer fully compatible with organic agriculture or with ecological certifications, the present invention allows to achieve a stability over time to keep the activity of the bacterial mixture of said soil activator composition without requiring additives. As previously explained, the biofertilizer granule according to the present invention with said coating comprising the soil activator composition has therefore an environmental footprint which is very low since lignosulfonate salts of sodium or calcium are a natural recycled by-product coming from wood pulping during paper manufacturing. They are non-toxic, non-corrosive and biodegradable, with a recognized and approved use in organic agriculture.

Said lignosulfonate salt is at least one amongst sodium lignosulfonate or calcium lignosulfonate. Lignosulfonate is an anionic biobased chemical with a heterogenous mixture of molecules with different degrees of polymerization and molecular weights. The sodium and calcium cations are counter-ions of the lignosulfonate. The sodium cation is monocharged while the calcium cation has two positive charges. The differences in charges modify the amount of counter-ions needed to obtain a neutral composition and in the interactions between counter-ions with soil, microorganism, and plants.

Said lignosulfonate acts as a mild chelator, which can help to make micronutrients more available for the plant. Indeed, the chelation of nutrients allows them to translocate within the plants better than without chelating agent.

Advantageously, said soil activator composition in said coating comprises 0.2%, preferably 0.3%, preferably 0.4%, preferably 0.5%, preferably 0.6%, preferably 0.7%, preferably 0.8%, preferably 0.9%, preferably 1%, preferably 1.1%, preferably 1.2%, preferably 1.3%, preferably 1.4%, preferably 1.5%, preferably 1.6%, preferably 1.7%, preferably 1.8%, preferably 1.9%, preferably 2%, preferably 2.1%, preferably 2.2%, preferably 2.3%, preferably 2.4%, preferably 2.5%, preferably 2.6%, preferably 2.7%, preferably 2.8%, preferably 2.9%, preferably 3%, preferably 3.1%, preferably 3.2%, preferably 3.3%, preferably 3.4%, preferably 3.5%, preferably 3.6%, preferably 3.7%, preferably 3.8%, preferably 3.9%, preferably 4%, preferably 4.1%, preferably 4.2%, preferably 4.3%, preferably 4.4%, preferably 4.5%, preferably 4.6%, preferably 4.7%, preferably 4.8%, preferably 4.9%, preferably 5%, preferably 5.2%, preferably 5.4%, preferably 5.6%, preferably 5.8%, preferably 6%, preferably 6.2%, preferably 6.4%, preferably 6.6%, preferably 6.8%, preferably 7%, preferably 7.2%, preferably 7.4%, preferably 7.6%, preferably 7.8%, preferably 8% or preferably 8.2% of a bacterial mixture with respect to the total weight of the soil activator composition in said coating of said biofertilizer granule according to the invention.

The bacterial mixture contains the bacteria species on a carrier and is homogeneously spread in the said at least one lignosulfonate salt. This dilution preserves the life span of the bacteria because the at least one lignosulfonate salt will act as a protective element for bacteria.

Said bacterial mixture contains at least 3 different species, with at least one species which is a nitrogen-fixing species and at least one species which is a phosphorus-solubilizing species to act at different levels for offering the required nutrient, i.e. nitrogen and phosphorus for improved growth of the plant.

The soil activator composition to be used in the coating of said biofertilizer granule according to the present invention has an extended shelf life characterized by at least 263 million (2.63×10⁸), preferably at least 500 million (5×10⁸) cfu total bacteria /g soil activator composition after at least 2 years and preferably after 3 years.

The extended shelf-life is measured, according to the present invention, by accelerated ageing tests that consist of blending each individual bacterial species with the at least one lignosulfonate salt, storing the blend at an elevated temperature, around 40°C more particular at 43°C, during 56 days (equivalent to approximately 2 years storage at room temperature). The bacteria count is then monitored over time by Total Plate Counts methodology according to ASTM-D5465-93 (dated 1998) standard.

In particular, the inventors use two methods to measure the extended shelf-life of the bacteria of said wettable powder soil activator composition according to the present invention :
1) The measurement of the wettable powder soil activator composition stored in standard commercial packaging at normal ambient conditions for at least 2 years, preferably for at least 3 years.
2) The measurement of wettable powder soil activator composition by accelerated ageing tests with storage for 56 days at around 40°C, more particularly at 43°C.
said measurement of bacteria is done by counting monitored over time by Total Plate Counts methodology according to ASTM-D5465-93 (dated 1998) standard.

In one preferred embodiment, said at least one inorganic fertilizer in said core of said biofertilizer granule is chosen in the group comprising primary or macronutrients fertilizers and/or secondary nutrients and/or micronutrients, and their mixture.

Said at least one inorganic fertilizer in said core of said biofertilizer granule can be straight fertilizers from primary or macronutrients usually required in largest amounts, for example nitrogen (N), phosphorus (P) or potassium (K), or can be straight fertilizers from secondary nutrients needed in moderate amounts compared to the primary essential nutrients, which are for example calcium (Ca), magnesium (Mg), sulfur (S), or can be straight fertilizers micronutrients, which are for example boron (B), chlorine (CI), copper (Cu), iron (Fe), manganese (Mn), molybdenum (Mo), zinc (Zn), or other micronutrients that could be needed by few plants are cobalt (Co), nickel (Ni), silicon (Si), sodium (Na), vanadium (V), and their mixture.

Said at least one inorganic fertilizer in said core of said biofertilizer granule can be compound fertilizers for example nitrogen-phosphorus (NP) fertilizer, nitrogen-potassium fertilizer (NK), phosphorus-potassium fertilizer (PK) or nitrogen-phosphorus-potassium fertilizer (NPK).

Said at least one inorganic fertilizer in said core of said biofertilizer granule can be complex fertilizers for example NPK + S (nitrogen-phosphorus-potassium fertilizer with addition of sulfur), NPK + MgO + B (nitrogen-phosphorus-potassium fertilizer with addition of magnesium oxide and boron), or more generally speaking at least one primary or macronutrients with at least one secondary nutrients and/or at least one micronutrients.

In one preferred embodiment, said at least one organic fertilizer in said core of said biofertilizer granule is chosen in the group comprising animal-based material, plant residues or waste from human origin, and their mixture.

More particular, said organic fertilizer according to the present invention is of animal, plant or human origin, or both (animal and plant) or all three.

Said at least one organic fertilizer from animal origin is for example ground horn, compost tea, guano, feathers, urea, hoof and bone meal, dried blood, fresh and composted manure, fish meal, frass from insects, and their mixture.

Said at least one organic fertilizer from plant origin is for example composted plant waste (by worms or by micro-organisms), algae, compost tea, plant extracts, pelletized plant biomass, green manure (solid or semi-solid) or other decoctions.

Said at least one organic fertilizer from waste of human origin is for example sewage sludge, industrial waste like paper crumble, urban compost.

In one preferred embodiment, said at least one biofertilizer in said core of said biofertilizer granule is chosen in the group comprising bacterial biofertilizers, fungal biofertilizers, algal biofertilizers, actinomycetes biofertilizers, and their mixture. Biofertilizers are microorganism-containing substances that, when added to soil, increase fertility and promote plant growth. The microorganisms have the capacity to enhance plant nutrient uptake by multiplying in the region of soil surrounding plant roots and making the nutrients more easily available to plant root.

In another preferred embodiment, said at least one fertilizer of said core of said biofertilizer granule is at least one frass fertilizer.

It is understood from the present invention that "frass" is a general term that means the things that insects, larvae, fish, shellfish, leave behind. For example, frass contain excrement produced from all the things they (insects, larvae, fish, shellfish etc...) consume as they go along like wood, human food, plant material, and other materials. Frass can also contain chitin, which is the main component in the exoskeletons of insects and shellfish. Moreover, the nutrients in frass, used as fertilizer according to the present invention, are in a readily available form that allows it to function more efficiently than a slow-release mineral or organic fertilizer.

In another embodiment of the present invention, said coating of the biofertilizer granule comprises a mixture of said soil activator composition and frass. In particular, said frass is chosen in the group comprising frass from insects, frass from fish or shellfish, and their mixture.

In one embodiment of the present invention, said core fertilizer of said biofertilizer granule is at least one shellfish frass.

In another embodiment of the present invention, said coating of said biofertilizer granule comprises a mixture of said soil activator composition and at least one shellfish frass.

More particularly, the present invention concerns a biofertilizer granule comprising a core and a coating, said core comprises a frass fertilizer, preferably chosen in the group comprising frass from insects, frass from fish or shellfish, and their mixture, said coating comprises at least a binding agent and a soil activator composition having an extended shelf-life duration, said soil activator composition comprising:
- From 91.8 to 99.8 weight% of at least one lignosulfonate salt with respect to the total weight of the soil activator composition,
- From 0.2 to 8.2 weight % of a bacterial mixture with respect to the total weight of the soil activator composition, said bacterial mixture containing at least 3 different bacteria species with one or more nitrogen fixing bacteria species and one or more phosphorus solubilizing bacteria species, and containing at least 263 million (2.63×10⁸) cfu total bacteria /g soil activator composition after said extended shelf life measured according to ASTM-D5465-93 (dated 1998) standard,
wherein said lignosulfonate salt is at least one amongst sodium lignosulfonate, calcium lignosulfonate, wherein said extended shelf life of said soil activator composition is higher than or equal to 2 years, preferably higher than or equal to 3 years.

In another embodiment of the present invention, said biofertilizer granule comprising a core and a coating, said core comprises at least one fertilizer chosen in the group comprising inorganic fertilizer, organic fertilizers, biofertilizer, and their mixture, said coating comprises at least a binding agent and a mixture of frass, preferably chosen in the group comprising frass from insects, frass from fish or shellfish, and their mixture, and soil activator composition having an extended shelf-life duration, said soil activator composition comprising:
- From 91.8 to 99.8 weight% of at least one lignosulfonate salt with respect to the total weight of the soil activator composition,
- From 0.2 to 8.2 weight % of a bacterial mixture with respect to the total weight of the soil activator composition, said bacterial mixture containing at least 3 different bacteria species with one or more nitrogen fixing bacteria species and one or more phosphorus solubilizing bacteria species, and containing at least 263 million (2.63×10⁸) cfu total bacteria /g soil activator composition after said extended shelf life measured according to ASTM-D5465-93 (dated 1998) standard,
wherein said lignosulfonate salt is at least one amongst sodium lignosulfonate, calcium lignosulfonate, wherein said extended shelf life of said soil activator composition is higher than or equal to 2 years, preferably higher than or equal to 3 years.

Moreover, according to the present invention, using a core fertilizer comprising frass and/or said coating comprising a mixture of said soil activator composition and frass, allows a better seed germination and plant establishment, improved crop vigor and health, increased nutrient density, higher yields and improved soil health.

In particular, the production of insects is an expanding market, notably Black Soldier Flies (Hermetica illucens), mealworms (or yellow mealworm beetle, Tenebrio molitor), and crickets (superfamily *Grylloidea*). Though frass is a byproduct of the primary production of these insects and insects in a more general manner, there is a growing interest in its value as an agricultural amendment, in particular in terms of frass as fertilizer.

In another embodiment of the present invention said fertilizer in said core is chosen in the group comprising calcium ammonium nitrate, monoammonium phosphate, diammonium phosphate, potassium chloride, potassium sulphate, urea, ammonium nitrate-based NPK, ammonium nitrate-based NP, ammonium nitrate-based NK, urea polymer coated, urea-based NPK, urea-based NP, urea-based NK, rock phosphate, turkey litter, chicken litter, ammonium nitrate, ammonium sulphate, single super phosphate, triple super phosphate, urease inhibitor coated, frass from insects, frass from fish or shellfish, excrement and their mixture.

Other nitrogen (N) fertilizers according to the present invention are chosen in the group comprising Ammonium Nitrate, Ammonium Nitrate-Limestone Mixtures, Ammonium Nitrate - Sulfate, Ammonium Sulfate, Ammonium Sulfate - Nitrate, Ammonium Sulfate - Urea, Calcium Ammonium Nitrate, Calcium Cyanamide, Calcium Nitrate, Calcium Nitrate - Urea, Ferrous Ammonium Sulfate, Sodium Nitrate, Sulfur Coated Urea, Urea, Urea - Formaldehyde, Zinc Manganese Ammonium Sulfate, and their mixture.

Other phosphate (P) fertilizers according to the present invention are chosen in the group comprising Ammonium Metaphosphate, Ammonium Phosphate, Diammonium Phosphate, Ammonium Polyphosphate, Basic Lime Phosphate, Ammonium Phosphate Nitrate, Ammonium Phosphate Sulfate, Basic Slag, Monoammonium Phosphate, Bone Black Spent, Bone Meal Raw, Bone Meal Steamed, Bone Precipitated, Calcium Metaphosphate, Colloidal Phosphate (Soft), Limestone Phosphatic, Magnesium Phosphate, Nitric Phosphate, Phosphate Rock, Precipitated Phosphate, Superphosphate Normal, Superphosphate Enriched, Triple Superphosphate, and their mixture.

Other potash (K) fertilizers according to the present invention are chosen in the group comprising Lime-Potash Mixtures, Manure Salts, Potassium Carbonate, Muriate of Potash 60%, Muriate of Potash 62%, Potassium - Magnesium Sulfate, Potassium tripolyphosphate, Tetrapotassium pyrophosphate, Potassium - Metaphosphate, Potassium Nitrate, Potassium - Sodium Nitrate, Potassium Sulfate, and their mixture.

Other natural organic fertilizers according to the present invention are chosen in the group comprising Dried Blood (food industry by-product), Castor Pomace, Cocoa Shell Meal, Cocoa Tankage, Compost, Cottonseed Meal, Fish Scrap, Guano, Insect Frass, Manure, Peat, Activated Sewage Sludge, Heat-Dried Sewage Sludge, Sewage Sludge, Soybean Meal, Alfalfa Meal, Animal Tankage, Linseed Meal, Tung Pomace, and their mixture.

Other secondary and micronutrient fertilizers according to the present invention are chosen in the group comprising Aluminum Sulfate, Borax, Brucite (Magnesium Hydroxide), Cobalt Sulfate, Copper Oxide, Copper Oxide Black, Copper Oxide Red, Copper Sulfate, Copper Chelate, Copper Compound, Ferric Oxide, Ferric Sulfate, Ferrous Sulfate, Iron Chelate, Iron Compound, Gypsum (Calcium Sulfate), Calcium Chelate, Calcium Sulfate (Hydrous), Magnesia (Magnesium Oxide), Epsom Salt (Magnesium Sulfate), Magnesium Chelate, Manganese Agstone, Manganese Chelate, Manganese Oxide, Manganese Slag, Manganese Sulfate, Manganous Oxide, Sodium Molybdonate, Sulfur, Calcium Chloride, Zinc Oxide, Zinc Oxysulfate, Zinc Sulfate, Zinc Chelate, and their mixture.

Lime products that can be used as fertilizers according to the present invention are chosen in the group comprising Calcium Oxide (Burnt), Calcium Hydroxide (Hydrate), Standard Dolomite, Dolomitic Lime (75% Neutral), Standard Calcite, Calcitic Lime (75% Neutral), Dolomitic & Calcitic Blend (Pelletized), and their mixture.

Advantageously, said one or more nitrogen fixing bacteria species of said soil activator composition of said coating according to the present invention is/are chosen amongst Bacillus subtilis, Bacillus licheniformis, Bacillus amyloliquefaciens, Pseudomonas monteilii, and/or said one or more phosphorus solubilizing bacteria species of said soil activator coating according to the present invention is/are chosen amongst Bacillus amyloliquefaciens, Pseudomonas monteilii or Pseudomonas putida.

In one other preferred embodiment, all nitrogen fixing bacteria species are chosen amongst Bacillus subtilis, Bacillus licheniformis, Bacillus amyloliquefaciens, Pseudomonas monteilii.

Advantageously, said bacterial mixture of said soil activator composition of said coating according to the present invention can contain at least one additional bacteria chosen in the group comprising Bacillus subtilis, Pseudomonas monteilii, Pseudomonas putida, Pseudomonas fluorescens, Pseudomonas agglomerans, Bacillus pumilis, and their mixture.

In an advantageous embodiment of the present invention, said soil activator coating comprises at least one anti-fungal bacteria.

For example, said at least one bacteria with antifungal activity of said soil activator composition of said biofertilizer granule according to the present invention is Pseudomonas monteilii.

For example, said at least one bacteria with antifungal activity of said soil activator composition of said biofertilizer granule according to the present invention is Pseudomonas fluorescens.

For example, said at least one bacteria with antifungal activity of said soil activator composition of said biofertilizer granule according to the present invention is Pseudomonas putida.

For example, said at least one bacteria with antifungal activity of said soil activator composition of said biofertilizer granule according to the present invention is Bacillus amyloliquefaciens.

For example, said at least one bacteria with antifungal activity of said soil activator composition of said biofertilizer granule according to the present invention is Bacillus pumilis.

For example, said at least one bacteria with antifungal activity of said soil activator composition of said biofertilizer granule according to the present invention is Bacillus liqueniformis.

In a preferred embodiment of the present invention, said bacterial mixture contains at least two bacteria with antifungal activity, preferably chosen in the group comprising Pseudomonas monteilii, Pseudomonas fluorescens, Pseudomonas putida, Bacillus amyloliquefaciens, Bacillus pumilis, Bacillus liqueniformis, and their combination.

Advantageously, said bacterial mixture contains at least 3 different species, at least a Bacillus subtilis as rhizobacteria, at least a Pseudomonas monteilii and at least a Bacillus amyloliquefaciens as bacteria species with antifungal activity.

In an advantageous embodiment on the present invention, said bacterial mixture contains at least one additional bacteria chosen in the group comprising Bacillus megaterium, Bacillus megaterium var. phosphaticum, Bacillus oleronius, Bacillus velezensis, Bacillus tequilensis, Bacillus cereus, Acinetobacter genus, Arthrobacter genus, Azoarcus species, Azospirillum species, Azospirillum brasilense, Azotobacter genus, Beijerinckia fluminensis, Bradyrhizobium species, Rhizobium species, Agrobacterium fabrum, Burkholderia vietnamiensis, Burkholderia cepacian, Enterobacter genus, Serratia species, Frankia, Acetobacter genus, Gluconacetobacter species, Gluconobacter species, Klebsiella, Pseudomonas genus, Streptomyces genus, Alcaligenes faecalis, Jeotgalicoccus genus, Paenibacillus alvei, Stenotrophomonas maltophilia, Achromobacter genus, Achromobacter xylosoxidans, Lactic acid bacteria, Chaetomium globosum, Exiguobacterium oxidotolerans, Herbaspirillum species, and their combination.

In one advantageous embodiment, said bacterial mixture of said soil activator composition of said coating according to the present invention contains at least 240 million (2.4×10⁸) cfu of Bacillus subtilis/g soil activator composition after said extended shelf life, measured according to ASTM-D5465-93 (dated 1998) standard, preferably at least 500 million (5.0×10⁸) cfu of Bacillus subtilis/g soil activator composition, more preferably at least 800 million (8.0×10⁸) cfu of Bacillus subtilis/g soil activator composition, even more preferably at least 1 billion (1.0×10⁹) cfu of Bacillus subtilis/g soil activator composition, in particular at least 1.4 billion (1.4×10⁹) cfu of Bacillus subtilis/g soil activator composition, more particular at least 1.8 billion (1.8×10⁹) cfu of Bacillus subtilis/g soil activator composition, even more particular at least 2.0 billion (2.0×10⁹) cfu of Bacillus subtilis/g soil activator composition, advantageously at least 2.4 billion (2.4×10⁹) cfu of Bacillus subtilis/g soil activator composition, more preferably at least 3.0 billion (3.0×10⁹) cfu of Bacillus subtilis/g soil activator composition, more preferably at least 4.0 billion (4.0×10⁹) cfu of Bacillus subtilis/g soil activator composition, even more preferably at least 5 billion (5.0×10⁹) cfu of Bacillus subtilis/g soil activator composition, in particular at least 6 billion (6.0×10⁹) cfu of Bacillus subtilis/g soil activator composition, more particular at least 7 billion (7.0×10⁹) cfu of Bacillus subtilis/g soil activator composition, even more particular at least 8 billion (8.0×10⁹) cfu of Bacillus subtilis/g soil activator composition, advantageously at least 9 billion (9.0×10⁹) cfu of Bacillus subtilis/g soil activator composition, advantageously at least 10 billion (1.0×10¹⁰) cfu of Bacillus subtilis/g soil activator composition, more preferably at least 12 billion (1.2×10¹⁰) cfu of Bacillus subtilis/g soil activator composition, more preferably at least 14 billion (1.4×10¹⁰) cfu of Bacillus subtilis/g soil activator composition, even more preferably at least 16 billion (1.6×10¹⁰) cfu of Bacillus subtilis/g soil activator composition, in particular at least 18 billion (1.8×10¹⁰) cfu of Bacillus subtilis/g soil activator composition, more particular at least 19 billion (1.9×10¹⁰) cfu of Bacillus subtilis/g soil activator composition, even more particular at least 20 billion (2.0×10¹⁰), preferably at least 25 billion (2.5×10¹⁰) cfu of Bacillus subtilis/g soil activator composition.

In a preferred embodiment, said bacterial mixture of said soil activator composition of said coating according to the present invention contains at least 5 million (5.0×10⁶) cfu of Bacillus amyloliquefaciens/g soil activator composition after said extended shelf life measured according to ASTM-D5465-93 (dated 1998) standard, preferably at least 10 million (1.0×10⁷) cfu of Bacillus amyloliquefaciens/g soil activator composition, more preferably at least 30 million (3.0×10⁷) cfu of Bacillus amyloliquefaciens/g soil activator composition, even more preferably at least 50 million (5.0×10⁷) cfu of Bacillus amyloliquefaciens/g soil activator composition, advantageously at least 70 million (7.0×10⁷) cfu of Bacillus amyloliquefaciens/g soil activator composition, more advantageously at least 90 million (9.0×10⁷) cfu of Bacillus amyloliquefaciens/g soil activator composition, even more advantageously at least 100 million (1.0×10⁸) cfu of Bacillus amyloliquefaciens/g soil activator composition, in particular at least 150 million (1.5×10⁸) cfu of Bacillus amyloliquefaciens/g soil activator composition, more particular at least 200 million (2.0×10⁸) cfu of Bacillus amyloliquefaciens/g soil activator composition, even more particular at least 250 million (2.5×10⁸) cfu of Bacillus amyloliquefaciens/g soil activator composition, preferably at least 300 million (3.0×10⁸) cfu of Bacillus amyloliquefaciens/g soil activator composition, more preferably at least 350 million (3.5×10⁸) cfu of Bacillus amyloliquefaciens/g soil activator composition, even more preferably at least 400 million (4.0×10⁸) cfu of Bacillus amyloliquefaciens/g soil activator composition, in particular at least 450 million (4.5×10⁸) cfu of Bacillus amyloliquefaciens/g soil activator composition, even more advantageously at least 500 million (5.0×10⁸) cfu of Bacillus amyloliquefaciens/g soil activator composition, preferably 900 million (9×10⁸) cfu of Bacillus amyloliquefaciens/g soil activator composition, preferably 1 billion (1×10⁹) cfu of Bacillus amyloliquefaciens/g soil activator composition, preferably 3 billion (3×10⁹) cfu of Bacillus amyloliquefaciens/g soil activator composition.

Advantageously, said bacterial mixture of said soil activator composition of said coating according to the present invention contains at least 10 million (1.0×10⁷) cfu of Pseudomonas monteilii/g soil activator composition after said extended shelf life, measured according to ASTM-D5465-93 (dated 1998) standard, preferably at least 15 million (1.5×10⁷) cfu of Pseudomonas monteilii/g soil activator composition, more preferably at least 20 million (2.0×10⁷) cfu of Pseudomonas monteilii/g soil activator composition, even more preferably at least 25 million (2.5×10⁷) cfu of Pseudomonas monteilii/g soil activator composition, in particular at least 30 million (3.0×10⁷) cfu of Pseudomonas monteilii/g soil activator composition, more particular at least 35 million (3.5×10⁷) cfu of Pseudomonas monteilii/g soil activator composition, even more particular at least 40 million (4.0×10⁷) cfu of Pseudomonas monteilii/g soil activator composition, advantageously at least 45 million (4.5×10⁷) cfu of Pseudomonas monteilii/g soil activator composition, more advantageously at least 50 million (5.0×10⁷) cfu of Pseudomonas monteilii/g soil activator composition, even more advantageously at least 55 million (5.5×10⁷) cfu of Pseudomonas monteilii/g soil activator composition, preferably at least 60 million (6.0×10⁷) cfu of Pseudomonas monteilii/g soil activator composition, more preferably at least 65 million (6.5×10⁷) cfu of Pseudomonas monteilii/g soil activator composition, even more preferably at least 70 million (7.0×10⁷) cfu of Pseudomonas monteilii/g soil activator composition, in particular at least 80 million (8.0×10⁷) cfu of Pseudomonas monteilii/g soil activator composition, more particular at least 90 million (9.0×10⁷) cfu of Pseudomonas monteilii/g soil activator composition, even more particular at least 100 million (1.0×10⁸) cfu of Pseudomonas monteilii/g soil activator composition, advantageously at least 200 million (2.0×10⁸) cfu of Pseudomonas monteilii/g soil activator composition, in particular at least 500 million (5.0×10⁸) cfu of Pseudomonas monteilii/g soil activator composition, advantageously at least 800 million (8.0×10⁸) cfu of Pseudomonas monteilii/g soil activator composition, preferably at least 1 billion (1.0×10⁹) cfu of Pseudomonas monteilii/g soil activator composition, advantageously at least 1.5 billion (1.5×10⁹) cfu of Pseudomonas monteilii/g soil activator composition, more advantageously at least 2.0 billion (2.0×10⁹) cfu of Pseudomonas monteilii/g soil activator composition.

In one advantageous embodiment according to the present invention, the ratio of cfu of the one or more phosphorus solubilizing bacteria species/g soil activator composition to total cfu bacteria /g soil activator is at least 0.01, preferably at least 0.02, more preferably at least 0.06, preferably at least 0.1, preferably at least 0.25, preferably at least 0.6 measured according to ASTM-D5465-93 (dated 1998) standard

It has been shown that for example the ratio of cfu of Pseudomonas monteilii as phosphorus solubilizing bacteria and nitrogen fixing bacteria/g soil activator composition to total cfu bacteria/g soil activator composition is very important to the growth of plant to provide enough bioavailable phosphorus and nitrogen to the plant and in good balance with the other nutrients made available by the remaining bacteria.

Preferably, the ratio of Pseudomonas monteilii to the other bacteria is at least 0.01, preferably at least 0.02, preferably at least 0.04, preferably 0.25, preferably 0.33, preferably 0.5, preferably 0.6, preferably 0.79.

Even more preferably, said bacterial mixture of said soil activator composition according to the present invention presents a relation of cfu of Pseudomonas monteilii to Bacillus subtilis defined as (cfu of Pseudomonas monteilii/cfu of Bacillus subtilis) multiplied by 100 of at least 0.01, preferably at least 0.02, preferably at least 0.04, preferably at least 0.10, preferably at least 0.20, preferably at least 0.30, preferably at least 0.5, preferably at least 0.6, preferably at least 0.70, preferably at least 0.8, preferably at least 1.0, preferably at least 1.5, preferably at least 2.0, preferably at least 2.5, preferably at least 3.0, preferably at least 3.5, preferably at least 4.0, preferably at least 4.5, preferably at least 5.0, preferably at least 5.5, preferably at least 6.0, preferably at least 6.5, preferably at least 7.0, preferably at least 7.5, preferably at least 8.0.

Moreover, said bacterial mixture of said soil activator composition of said coating according to the present invention contains at least 500 million (5.0×10⁸) cfu total bacteria /g soil activator composition after said extended shelf life measured according to ASTM-D5465-93 (dated 1998) standard, preferably at least 700 million (7.0×10⁸) cfu total bacteria /g soil activator composition, more preferably at least 900 million (9.0×10⁸) cfu total bacteria /g soil activator composition, even more preferably at least 1 billion (1.0×10⁹) cfu total bacteria /g soil activator composition, advantageously at least 2 billion (2.0×10⁹) cfu total bacteria /g soil activator composition, more advantageously at least 3 billion (3.0×10⁹) cfu total bacteria /g soil activator composition, even more advantageously at least 4 billion (4.0×10⁹) cfu total bacteria /g soil activator composition, in particular at least 5 billion (5.0×10⁹) cfu total bacteria /g soil activator composition, more particular at least 6 billion (6.0×10⁹) cfu total bacteria /g soil activator composition, even more particular at least 7 billion (7.0×10⁹) cfu total bacteria /g soil activator composition, particularly at least 8 billion (8.0×10⁹) cfu total bacteria /g soil activator composition, more particularly at least 9 billion (9.0×10⁹) cfu total bacteria /g soil activator composition, even more particularly at least 10 billion (1.0×10¹⁰) cfu total bacteria /g soil activator composition, preferably at least 11 billion (1.1×10¹⁰) cfu total bacteria /g soil activator composition, advantageously at least 12 billion (1.2×10¹⁰) cfu total bacteria /g soil activator composition, more advantageously at least 13 billion (1.3×10¹⁰) cfu total bacteria /g soil activator composition, even more advantageously at least 14 billion (1.4×10¹⁰) cfu total bacteria /g soil activator composition, in particular at least 15 billion (1.5×10¹⁰) cfu total bacteria /g soil activator composition, more particular at least 16 billion (1.6×10¹⁰) cfu total bacteria /g soil activator composition, even more particular at least 17 billion (1.7×10¹⁰) cfu total bacteria /g soil activator composition, particularly at least 18 billion (1.8×10¹⁰) cfu total bacteria /g soil activator composition, more particularly at least 19 billion (1.9×10¹⁰) cfu total bacteria /g soil activator composition, even more particularly at least 20 billion (2.0×10¹⁰) cfu total bacteria /g soil activator composition, advantageously at least 25 billion (2.5×10¹⁰) cfu total bacteria /g soil activator composition, in particular at least 50 billion (5.0×10¹⁰) cfu total bacteria /g soil activator composition.

In one embodiment, the wettable powder soil activator composition of the coating has a mean diameter of about 85 µm to ensure a convenient use of the composition, i.e. quickly suspended/solubilized in water or other liquids, compatible with most agricultural liquid application equipment, able to be coated on fertilizer core to form biofertilizer granule according to the present invention.

In one preferred embodiment, the soil activator composition of said coating of the biofertilizer granule according to the present invention comprises insoluble matter to a maximum of 1 weight% of the total weight of the soil activator composition in said coating, said insoluble matter having any dimension smaller than 100 µm.

In one particular embodiment of the biofertilizer granule according to the present invention, said granule presents an average particle size diameter between 0.6 and 10 mm, preferably between 0.6 and 9 mm, preferably between 0.6 and 8 mm, preferably between 0.6 and 7 mm, preferably between 0.6 and 6 mm, preferably between 0.6 and 5 mm, preferably between 0.8 and 4 mm. For example, an average particle size diameter of 0.6 mm, 0.7 mm, 0.8 mm, 0.9 mm, 1.0 mm, 1.1 mm, 1.2 mm, 1.3 mm, 1.4 mm, 1.5 mm, 1.6 mm, 1.7 mm, 1.8 mm, 1.9 mm, 2.0 mm, 2.1 mm, 2.2 mm, 2.3 mm, 2.4 mm, 2.5 mm, 2.6 mm, 2.7 mm, 2.8 mm, 2.9 mm, 3.0 mm, 3.1 mm, 3.2 mm, 3.3 mm, 3.4 mm, 3.5 mm, 3.6 mm, 3.7 mm, 3.8 mm, 3.9 mm, 4.0 mm, 4.1 mm, 4.2 mm, 4.3 mm, 4.4 mm, 4.5 mm, 4.6 mm, 4.7 mm, 4.8 mm, 4.9 mm, 5.0 mm, 5.1 mm, 5.2 mm, 5.3 mm, 5.4 mm, 5.5 mm, 5.6 mm, 5.7 mm, 5.8 mm, 5.9 mm, 6.0 mm, 6.1 mm, 6.2 mm, 6.3 mm, 6.4 mm, 6.5 mm, 6.6 mm, 6.7 mm, 6.8 mm, 6.9 mm, 7.0 mm, 7.1 mm, 7.2 mm, 7.3 mm, 7.4 mm, 7.5 mm, 7.6 mm, 7.7 mm, 7.8 mm, 7.9 mm, 8.0 mm, 8.1 mm, 8.2 mm, 8.3 mm, 8.4 mm, 8.5 mm, 8.6 mm, 8.7 mm, 8.8 mm, 8.9 mm, 9.0 mm, 9.1 mm, 9.2 mm, 9.3 mm, 9.4 mm, 9.5 mm, 9.6 mm, 9.7 mm, 9.8 mm, 9.9 mm or 10 mm.

In one particular embodiment of the biofertilizer granule according to the present invention, said granule presents a size guide number between 60 and 1000, preferably 60 and 900, preferably between 60 and 800, preferably between 60 and 700, preferably between 60 and 600, preferably between 60 and 500 mm, preferably between 80 and 400. For example, a size guide number of 70, 80, 90, 100, 110, 120, 130, 140, 150, 160, 170, 180, 190, 200, 210, 220, 230, 240, 250, 260, 270, 280, 290, 300, 310, 320, 330, 340, 350, 360, 370, 380, 390, 400, 410, 420, 430, 440, 450, 460, 470, 480, 490, 500, 510, 520, 530, 540, 550, 560, 570, 580, 590, 600, 610, 620, 630, 640, 650, 660, 670, 680, 690, 700, 710, 720, 730, 740, 750, 760, 770, 780, 790, 800, 810, 820, 830, 840, 850, 860, 870, 880, 890, 900, 910, 920, 930, 940, 950, 960, 970, 980, 990 or 1000.

In another particular embodiment of the biofertilizer granule according to the present invention, said granule present an uniformity index [(d₉₅/d₁₀) multiplied by 100)] between 25 and 80, preferably between 40 and 60.

In another particular embodiment according to the present invention, the biofertilizer granule comprises less than 10 weight% moisture, preferably less than 7 weight% moisture determined by weight loss on drying (LOD) upon heating at 105°C.

In another embodiment, the soil activator composition of the coating of said biofertilizer granule according to the present invention comprises additives. While it is preferable to keep the number of ingredients as low as possible for some ecological certifications or for keeping the environmental impact as low as possible, it is not excluded according to the present invention to have some nutrient additives or other additives for specific applications.

In a particular embodiment of the present invention, said soil activator composition of said coating comprises at least one additive chosen in the group comprising seaweed powder, humic and/or fulvic acids, natural rock dusts such as wollastonite, basalt, diatomite etc., and their mixture.

In a particular embodiment, said soil activator composition of the coating of said biofertilizer granule according to the present invention comprises at least one additive, preferably said at least one additive is selected from the group comprising calcium-based compounds, such as CaO, phosphorus-based compounds, such as P₂O₅, magnesium-based compounds, such as MgO, potassium-based compounds, such as K₂O, nitrogen-based compounds, such as NH₄⁺, sulfur-based compounds, such as SO₄²⁻, and their mixture.

Advantageously, said at least a binding agent of the coating of said biofertilizer granule according to the present invention is chosen from the group comprising mineral oil, water, vegetable oil, crude glycerin, and their mixture.

Even more advantageously, said coating of said biofertilizer granule according to the present invention comprises between 15 wt% and 85 wt% of said binding agent, preferably between 30 wt% and 80 wt%, more preferably between 35 wt% and 75 wt%, even more preferably between 40 wt% and 75 wt%, advantageously between 45 wt% and 75 wt%, in particular between 50 wt% and 75 wt%.

For example, said coating of said biofertilizer granule according to the present invention comprises 50 wt% of said binding agent, 51 wt%, 52 wt%, 53 wt%, 54 wt%, 55 wt%, 56 wt%, 57 wt%, 58 wt%, 59 wt%, 60 wt%, 61 wt%, 62 wt%, 63 wt%, 64 wt%, 65 wt%, 66 wt%, 67 wt%, 68 wt%, 69 wt%, 70 wt%, 71 wt%, 72 wt%, 73 wt%, 74 wt%, 75 wt%, 76 wt%, 77 wt%, 78 wt%, 79 wt%, 80 wt%, 81 wt%, 82 wt%, 83 wt%, 84 wt% or 85 wt% of said soil activator composition.

In particular, said coating of said biofertilizer granule according to the present invention comprises between 15 wt% and 85 wt% of said soil activator composition, preferably between 20 wt% and 75 wt%, more preferably between 25 wt% and 65 wt%, even more preferably between 25 wt% and 60 wt%, advantageously between 25 wt% and 55 wt%, in particular between 25 wt% and 50 wt%.

For example, said coating of said biofertilizer granule according to the present invention comprises 25 wt% of said soil activator composition, 26 wt%, 27 wt%, 28 wt%, 29 wt%, 30 wt%, 31 wt%, 32 wt%, 33 wt%, 34 wt%, 35 wt%, 36 wt%, 37 wt%, 38 wt%, 39 wt%, 40 wt%, 41 wt%, 42 wt%, 43 wt%, 44 wt%, 45 wt%, 46 wt%, 47 wt%, 48 wt%, 49 wt% or 50 wt% of said soil activator composition.

For example, in the soil activator composition of said coating according to the present invention, nitrogen is present in an amount from 2 to 6 weight% based on the total weight of the soil activator composition.

In another exemplary composition according to the present invention, phosphorus is present in an amount comprised between 0.15 and 0.4 equivalent P₂O₅ weight % based on the total weight of the soil activator composition.

In yet another exemplary soil activator composition according to the present invention, potassium is present in an amount between 0.15 and 0.4 equivalent K₂O weight % based on the total weight of the soil activator composition.

In another exemplary soil activator composition according to the present invention, sulphur is present in an amount comprised between 2 to 8 weight % based on the total weight of the soil activator composition.

In still another exemplary soil activator composition according to the present invention, calcium is present between 0.1 and 0.2 equivalent CaO weight % based on the total weight of the soil activator composition.

In one other exemplary soil activator composition according to the present invention, magnesium is present in an amount comprised between 0.05 and 0.1 equivalent MgO weight % based on the total weight of the soil activator composition.

More particularly, said calcium lignosulfonate contains between 4 and 9 wt% of calcium equivalent CaO % based on the total weight of said at least one calcium lignosulfonate.

In one particular embodiment, said soil activator composition of the coating of said biofertilizer granule according to the present invention has an additional biofungicide activity. It helps to suppress certain diseases.

In a certain embodiment, the disease that is suppressed by said soil activator coating of said biofertilizer granule is selected from the list: Phytophthora infestans, Alternaria solani, Fusarium oxysporum lycopersici, Botrytis cinerea, Sclérotinia, Phoma du colza (Leptosphaeria maculans), Microdochium nivale, Verticillium dahlia, Mycosphaerella fijiensis.

Other embodiments of the biofertilizer granule according to the present invention are mentioned in the appended claims and the subsequent description of an embodiment of the invention.

The present invention also relates to a method for preparing a biofertilizer granule according to the present invention.

Preferably, said method for preparing a biofertilizer granule according to the present invention comprises the following steps:
- Preparing a bacterial mixture with lyophilized bacteria by dosing the one or more nitrogen fixing bacteria species to reach at least 2.55 billion (2.55×10⁹) cfu nitrogen fixing bacteria/g soil activator composition, measured according to ASTM-D5465-93 (dated 1998) standard and the one or more phosphorus solubilizing bacteria species to reach at least 2 billion (2×10⁹) cfu of phosphorus solubilizing bacteria /g soil activator composition measured according to ASTM-D5465-93 (dated 1998) standard, and
- Mixing said bacterial mixture with a lignosulfonate salt chosen amongst sodium lignosulfonate or calcium lignosulfonate to form said soil activator composition,
- Combining said soil activator composition with at least a fertilizer chosen in the group comprising inorganic fertilizer, organic fertilizers, biofertilizer, and their mixture, and at least a binding agent, either by mixing said soil activator composition with said at least binding agent and then blending said blend of binding agent and soil activator composition with the fertilizer, or by mixing the soil activator composition with the fertilizer and then adding said at least binding agent,
- Blending the mix for a predetermined period of time, preferably between 1 and 15 minutes, in particular between 1 and 10 minutes, more particular between 2 and 5 minutes, or until all fertilizer are evenly coated, to obtain said biofertilizer granule.

Said mix in the blending step is a mix with said soil activator composition, said blending agent and said at least a fertilizer.

As it can be seen, in the method according to the present invention, the bacterial mixture is prepared with a high count of bacteria to ensure the minimal cfu is still achieved after extended shelf life while not diluting the lignosulfonate content and not requiring the addition of aids or mandatory additives to obtain a stable wettable powder soil activator composition.

Accordingly, the method according to the present invention is very simple and allows to reach an ecological formulation with a low environmental footprint.

Other embodiments of the method according to the present invention are mentioned in the appended claims and the subsequent description of an embodiment of the invention.

Other characteristics and advantages of the present invention will be derived from the non-limitative following description, and by making reference to the drawings and the examples.

### Example 1.-

A wettable powder soil activator composition was prepared by measuring the necessary quantities of high-count Bacillus subtilis, Bacillus amyloliquefaciens, and Pseudomonas monteilii powders to achieve each of their target counts in the finished formula (1.25 billion cfu/g, 25 million cfu/g, and 400 million cfu/g, respectively (1.25×10⁹ cfu/g, 2.5×10⁷ cfu/g, and 4.0×10⁸ cfu/g, respectively)). The three powders were combined to form a bacterial mixture having a weight of 2.12 grams.

The bacterial mixture was added to 997.88 grams of sodium lignosulfonate and mixed until a homogeneous wettable powder composition of one kilogram was achieved.

The actual ratios of the three species at the time of manufacturing include more Pseudomonas to make sure that the product does not lose its balance during its 3-year shelf life, because that species has a shorter shelf life than the other two.

The count of bacteria (cfu) after three years of storage is above 2.48×10⁸ cfu Bacillus subtilis per gram of solid soil activator composition, above 5.0×10⁶ cfu Bacillus amyloliquefaciens per gram of solid soil activator composition and 1.0×10⁷ cfu Pseudomonas monteilii per gram of solid soil activator composition.

At the time of production, the count of bacteria in cfu was performed by using two methodologies:
1: Total Plate Count. This quantifies the total number of viable bacteria in the product but cannot separate the different species. The measurement was performed according to ASTM-D5465-93 (dated 1998) standard.
2: qPCR. This is a genetic test based on the amount of unique DNA in the sample from the three species, so it can quantify the levels of each species separately. However, it does not differentiate between living and non-living bacteria. The test was performed according to the ASTM D8412-21 standardStandard Guide for Quantification of Microbial Contamination in Liquid Fuels and Fuel-Associated Water by Quantitative Polymerase Chain Reaction (qPCR).

### EXAMPLE 2.- Storage of wettable powder soil activator composition at elevated temperature ("accelerated shelf life test")

One soil activator composition was prepared using three bacteria strains : Bacillus subtilis, Bacillus amyloliquefaciens, and Pseudomonas monteilii.

The bacteria were blended with dry powdered sodium lignosulfonate to obtain said soil activator composition according to the present invention, then stored in sealed plastic bags at 43°C.

Subsamples were removed periodically to measure the total quantity of bacteria using the total plate count method (ASTM-D5465-93, dated 1998). The final measurement was made after storage for 56 days, equivalent to 3 years.

The results of the total plate counts on each date were transformed using the log₁₀ and then standardized on each date by calculating the percentage of the original counts on day 0. These values were plotted to identify the evolution of the quantity of viable cells in said soil activator composition over time.

The soil activator composition according to the present invention had a starting bacteria count of 3.55×10⁸ cfu/g. The counts on each date are presented in the following table:

**Table 1: Total Plate Counts of soil activator composition stored at 43° Celsius: "SLS" was a soil activator formulated with sodium lignosulfonate. The table includes the Log₁₀ transformations of the bacteria counts, and the calculation of the percentage of initial counts on each measurement date.**

| | | **Day** | | | | |
|---|---|---|---|---|---|---|
| | | *0* | *7* | *14* | *28* | *56* |
| **SLS** | *Counts (CFU*/*g)* | 3.55×10^8 | 2.88×10^8 | 2.70×10^8 | 3.8×10^8 | 1.07×10^9 |
| | *Log₁₀* | 8.55 | 8.46 | 8.43 | 8.58 | 9.03 |
| | *% of initial* | 100% | 99% | 99% | 100% | 106% |

The bacteria counts in the soil activator composition with sodium lignosulfonate according to the present invention remained near 100% for the duration of the test, indicating that sodium lignosulfonate provides extended shelf-life and stability to the bacteria.

### EXAMPLE 3.- Storage of wettable powder soil activator composition at room temperature for 3 years

One soil activator composition was prepared using three bacteria strains : Bacillus subtilis, Bacillus amyloliquefaciens, and Pseudomonas monteilii.

The bacteria were blended with dry powdered sodium lignosulfonate to obtain said soil activator composition according to the present invention, then stored in sealed plastic bags at room temperature for3 years and was tested using qPCR analysis.

This is a genetic test based on the amount of unique DNA in the sample from the three species, so it can quantify the levels of each species separately. The test was performed according to the ASTM D8412-21 standardStandard Guide for Quantification of Microbial Contamination in Liquid Fuels and Fuel-Associated Water by Quantitative Polymerase Chain Reaction (qPCR). The results of this analysis were compared to the results of Total Plate Count method testing performed on the same lot after the production.

The Soil Activator composition according to the present invention has been tested after the production by a third party lab using the Total Plate Count methodology, with a result of 5.9×10⁸ cfu/g.

After 3 years of storage at room temperature, a sample was taken from said Soil Activator composition according to the invention. The sample was analysed by a third-party lab using the qPCR method. Based on this methodology, it has been found a total of 1.88×10⁹ cfu/g in the sample.

Thus, it has been concluded that the bacterial mixture and more specifically the bacteria Bacillus subtilis, Bacillus amyloliquefaciens and Pseudomonas monteilii was still present in the Soil Activator at the specified levels after 3 years of storage, moreover it indicates that sodium lignosulfonate provides extended shelf-life and stability to the bacteria.

### EXAMPLE 4.- Biofertilizer granule according to the present invention

Three different methods of coating have been tested.

**Method A** - A slurry of soil activator composition according to Example 1 was formed with crude glycerin as binding agent. A small amount of soil activator composition was added to said crude glycerin and mixed. Additional soil activator composition was gradually incorporated until just before the viscosity of the mixture became too high. This ensured that the slurry would still be workable in the production process.

The inventors found that soil activator composition was easy to incorporate to crude glycerin as binding agent. Viscosity started increasing in the range 15 wt% soil activator composition with 85 wt% crude glycerin, until 25 wt% soil activator composition with 75 wt% crude glycerin. Thus, for example, every 100 grams of said slurry contain between 15 wt% and 25 wt% of said soil activator composition.

Once the slurry (soil activator composition with crude glycerin as binding agent) was created, 10 kilograms of commercially blended turf fertilizer was added to a horizontal mixer and the motor was engaged to begin rotation. A small amount of said slurry was added to the drum and allowed to mix for 2 minutes. The granules were inspected for the evenness of the coating, as well as the apparent stickiness of the granules. Additional product was incorporated in stages with repeated observations of physical condition until the blend became too sticky to be practical, for a total amount of 20 mL of said slurry, to obtain biofertilizer granules according to the present invention coated with soil activator composition with crude glycerin as binding agent.

Biofertilizer granules coated according to the invention were placed in sealed bags and stored at room temperature.

**Method B1** - 10 kilograms of commercially blended turf fertilizer was added to a horizontal mixer with 20 grams of soil activator composition according to Example 1, and the motor was engaged to begin rotation. Then crude glycerin as binding agent was progressively added to said mixer, to obtain biofertilizer granule according to the present invention.

The inventors found that it was possible to experiment with higher rates of soil activator composition in smaller quantities of crude glycerin than in Method A. Inventors successfully incorporated 2 kilograms of soil activator composition per tonne of fertilizer using only 2 litters of crude glycerin, (20 grams of soil activator composition to 10 kilograms of fertilizer with 20 mL of crude glycerin as binding agent) notably a ratio of 50 wt% of soil activator composition with 50 wt% crude glycerin.

Biofertilizer granules coated according to the invention were placed in sealed bags and stored at room temperature.

**Method B2** -20 kilograms of commercially blended turf fertilizer was added to a horizontal mixer with 30 grams of soil activator composition according to Example 1, and the motor was engaged to begin rotation. Then crude glycerin as binding agent and 200 grammes of bentonite as drying agent were progressively added to said mixer, to obtain biofertilizer granule according to the present invention.

Inventors successfully incorporated 30 grams of soil activator composition for 20 kilograms of fertilizer using 50 mL of crude glycerin as binding agent and 200 grams of bentonite as drying agent, notably a ratio of 37.5 wt% of soil activator composition with 62.5 wt% crude glycerin.

Biofertilizer granules coated according to the invention were placed in sealed bags and stored at room temperature.

**Method C** - A slurry of soil activator composition according to Example 1 was formed with water as binding agent. A small amount of soil activator composition was added to said water and mixed. Additional soil activator composition was gradually incorporated until just before the viscosity of the mixture became too high. This ensured that the slurry would still be workable in the production process.

The inventors found that soil activator composition was even easier to incorporate to water as binding agent compared to glycerin. Viscosity started increasing in the range 25 wt% soil activator composition with 75 wt% water, until 50 wt% soil activator composition with 50 wt% water. Thus, for example, every 100 grams of said slurry contain between 25 wt% and 50 wt% of said soil activator composition.

Once the slurry (soil activator composition with water as binding agent) was created :
Condition 1 : 10 kilograms of commercially blended turf fertilizer was added to a horizontal mixer and the motor was engaged to begin rotation. A small amount of said slurry was added to the drum and allowed to mix for 2 minutes. The granules were inspected for the evenness of the coating, as well as the apparent stickiness of the granules. Additional product was incorporated in stages with repeated observations of physical condition until the blend became too sticky to be practical, for a total amount of 20 mL of said slurry, to obtain biofertilizer granules according to the present invention coated with soil activator composition with water as binding agent.
Condition 2: 10 kilograms of commercially blended turf fertilizer was added to a horizontal mixer and the motor was engaged to begin rotation. A small amount of said slurry was added to the drum and allowed to mix for 2 minutes. The granules were inspected for the evenness of the coating, as well as the apparent stickiness of the granules. Additional product was incorporated in stages with repeated observations of physical condition until the blend became too sticky to be practical, for a total amount of 30 mL of said slurry, to obtain biofertilizer granules according to the present invention coated with soil activator composition with water as binding agent.

Biofertilizer granules coated according to the invention were placed in sealed bags and stored at room temperature.

After 5 weeks of storage of biofertilizer granules according to Example 3 (Method A, Method B1, Method B2, Method C condition 1 and Method C condition 2), the granules were evaluated for their physical condition, there is no observed stickiness or agglomeration or softening of the coated granules according to the invention.

It should be understood that the present invention is not limited to the described embodiments and that variations can be applied without going outside of the scope of the claims.

For example, the number of cfu was measured typically according to ASTM-D5465-93 (dated 1998) standard but it is also foreseen to measure the number of cfu viable bacteria is measured by the methodology of quantitative real-time polymerase chain reaction (qPCR)performed according to the ASTM D8412-21 standard - Standard Guide for Quantification of Microbial Contamination in Liquid Fuels and Fuel-Associated Water by Quantitative Polymerase Chain Reaction (qPCR).

## Claims

1. Biofertilizer granule comprising a core and a coating, said core comprises at least one fertilizer chosen in the group comprising inorganic fertilizer, organic fertilizers, biofertilizer, and their mixture, said coating comprises at least a binding agent and a soil activator composition having an extended shelf-life duration, said soil activator composition comprising:
- From 91.8 to 99.8 weight% of at least one lignosulfonate salt with respect to the total weight of the soil activator composition,
- From 0.2 to 8.2 weight % of a bacterial mixture with respect to the total weight of the soil activator composition, said bacterial mixture containing at least 3 different bacteria species with one or more nitrogen fixing bacteria species and one or more phosphorus solubilizing bacteria species, and containing at least 263 million (2.63×10⁸) cfu total bacteria /g soil activator composition after said extended shelf life measured according to ASTM-D5465-93 (dated 1998) standard,
wherein said lignosulfonate salt is at least one amongst sodium lignosulfonate, calcium lignosulfonate, wherein said extended shelf life of said soil activator composition is higher than or equal to 2 years, preferably higher than or equal to 3 years.

2. Biofertilizer granule according to claim 1, wherein said biofertilizer granule presents a size guide number between 60 and 1000.

3. Biofertilizer granule according to claim 1 or 2, wherein said at least one inorganic fertilizer is chosen in the group comprising primary or macronutrients fertilizers and/or secondary nutrients and/or micronutrients, and their mixture.

4. Biofertilizer granule according to any one of claim 1 to 3, wherein said at least one organic fertilizer is chosen in the group comprising animal based material, plant residues or waste from human origin, and their mixture.

5. Biofertilizer granule according to any one of claims 1 to 4, wherein said at least one biofertilizer is chosen in the group comprising bacterial biofertilizers, fungal biofertilizers, algal biofertilizers, actinomycetes biofertilizers, and their mixture.

6. Biofertilizer granule according to any one of claims 1 to 5, wherein said fertilizer is chosen in the group comprising calcium ammonium nitrate, monoammonium phosphate, diammonium phosphate, potassium chloride, potassium sulphate, urea, ammonium nitrate-based NPK, ammonium nitrate-based NP, ammonium nitrate-based NK, urea polymer coated, urea-based NPK, urea-based NP, urea-based NK, rock phosphate, turkey litter, chicken litter, ammonium nitrate, ammonium sulphate, single super phosphate, triple super phosphate, urease inhibitor coated, frass from insects, frass from fish or shellfish, excrement and their mixture.

7. Biofertilizer granule according to any one of claims 1 to 6, wherein said one or more nitrogen fixing bacteria species of said soil activator composition of said coating is/are chosen amongst Bacillus subtilis, Bacillus licheniformis, Bacillus amyloliquefaciens, Pseudomonas monteilii or Pseudomonas putida, and/or said one or more phosphorus solubilizing bacteria species of said soil activator coating is/are chosen amongst Bacillus amyloliquefaciens, Pseudomonas monteilii or Pseudomonas putida.

8. Biofertilizer granule according to any one of claims 1 to 7, wherein said bacterial mixture of said soil activator composition of said coating contains at least 240 million (2.4×10⁸) cfu of Bacillus subtilis/g soil activator composition after said extended shelf life, measured according to ASTM-D5465-93 (dated 1998) standard, preferably at least 500 million (5.0×10⁸) cfu of Bacillus subtilis/g soil activator composition, more preferably at least 800 million (8.0×10⁸) cfu of Bacillus subtilis/g soil activator composition, even more preferably at least 1 billion (1.0×10⁹) cfu of Bacillus subtilis/g soil activator composition, in particular at least 1.4 billion (1.4×10⁹) cfu of Bacillus subtilis/g soil activator composition, more particular at least 1.8 billion (1.8×10⁹) cfu of Bacillus subtilis/g soil activator composition, even more particular at least 2.0 billion (2.0×10⁹) cfu of Bacillus subtilis/g soil activator composition, advantageously at least 2.4 billion (2.4×10⁹) cfu of Bacillus subtilis/g soil activator composition, more preferably at least 3.0 billion (3.0×10⁹) cfu of Bacillus subtilis/g soil activator composition, more preferably at least 4.0 billion (4.0×10⁹) cfu of Bacillus subtilis/g soil activator composition, even more preferably at least 5 billion (5.0×10⁹) cfu of Bacillus subtilis/g soil activator composition, in particular at least 6 billion (6.0×10⁹) cfu of Bacillus subtilis/g soil activator composition, more particular at least 7 billion (7.0×10⁹) cfu of Bacillus subtilis/g soil activator composition, even more particular at least 8 billion (8.0×10⁹) cfu of Bacillus subtilis/g soil activator composition, advantageously at least 9 billion (9.0×10⁹) cfu of Bacillus subtilis/g soil activator composition, advantageously at least 10 billion (1.0×10¹⁰) cfu of Bacillus subtilis/g soil activator composition, more preferably at least 12 billion (1.2×10¹⁰) cfu of Bacillus subtilis/g soil activator composition, more preferably at least 14 billion (1.4×10¹⁰) cfu of Bacillus subtilis/g soil activator composition, even more preferably at least 16 billion (1.6×10¹⁰) cfu of Bacillus subtilis/g soil activator composition, in particular at least 18 billion (1.8×10¹⁰) cfu of Bacillus subtilis/g soil activator composition, more particular at least 19 billion (1.9×10¹⁰) cfu of Bacillus subtilis/g soil activator composition, even more particular at least 20 billion (2.0×10¹⁰), preferably at least 25 billion (2.5×10¹⁰) cfu of Bacillus subtilis/g soil activator composition.

9. Biofertilizer granule according to any one of claims 1 to 8, wherein said bacterial mixture of said soil activator composition of said coating contains at least 5 million (5.0×10⁶) cfu of Bacillus amyloliquefaciens/g soil activator composition after said extended shelf life measured according to ASTM-D5465-93 (dated 1998) standard, preferably at least 10 million (1.0x107) cfu of Bacillus amyloliquefaciens/g soil activator composition, more preferably at least 30 million (3.0×10⁷) cfu of Bacillus amyloliquefaciens/g soil activator composition, even more preferably at least 50 million (5.0×10⁷) cfu of Bacillus amyloliquefaciens/g soil activator composition, advantageously at least 70 million (7.0×10⁷) cfu of Bacillus amyloliquefaciens/g soil activator composition, more advantageously at least 90 million (9.0×10⁷) cfu of Bacillus amyloliquefaciens/g soil activator composition, even more advantageously at least 100 million (1.0×10⁸) cfu of Bacillus amyloliquefaciens/g soil activator composition, in particular at least 150 million (1.5×10⁸) cfu of Bacillus amyloliquefaciens/g soil activator composition, more particular at least 200 million (2.0×10⁸) cfu of Bacillus amyloliquefaciens/g soil activator composition, even more particular at least 250 million (2.5×10⁸) cfu of Bacillus amyloliquefaciens/g soil activator composition, preferably at least 300 million (3.0×10⁸) cfu of Bacillus amyloliquefaciens/g soil activator composition, more preferably at least 350 million (3.5×10⁸) cfu of Bacillus amyloliquefaciens/g soil activator composition, even more preferably at least 400 million (4.0×10⁸) cfu of Bacillus amyloliquefaciens/g soil activator composition, in particular at least 450 million (4.5×10⁸) cfu of Bacillus amyloliquefaciens/g soil activator composition, even more advantageously at least 500 million (5.0×10⁸) cfu of Bacillus amyloliquefaciens/g soil activator composition, preferably 900 million (9×10⁸) cfu of Bacillus amyloliquefaciens/g soil activator composition, preferably 1 billion (1×10⁹) cfu of Bacillus amyloliquefaciens/g soil activator composition, preferably 3 billion (3×10⁹) cfu of Bacillus amyloliquefaciens/g soil activator composition.

10. Biofertilizer granule according to any one of claims 1 to 9, wherein said bacterial mixture of said soil activator composition of said coating contains at least 10 million (1.0×10⁷) cfu of Pseudomonas monteilii/g soil activator composition after said extended shelf life, measured according to ASTM-D5465-93 (dated 1998) standard, preferably at least 15 million (1.5×10⁷) cfu of Pseudomonas monteilii/g soil activator composition, more preferably at least 20 million (2.0×10⁷) cfu of Pseudomonas monteilii/g soil activator composition, even more preferably at least 25 million (2.5×10⁷) cfu of Pseudomonas monteilii/g soil activator composition, in particular at least 30 million (3.0×10⁷) cfu of Pseudomonas monteilii/g soil activator composition, more particular at least 35 million (3.5×10⁷) cfu of Pseudomonas monteilii/g soil activator composition, even more particular at least 40 million (4.0×10⁷) cfu of Pseudomonas monteilii/g soil activator composition, advantageously at least 45 million (4.5×10⁷) cfu of Pseudomonas monteilii/g soil activator composition, more advantageously at least 50 million (5.0×10⁷) cfu of Pseudomonas monteilii/g soil activator composition, even more advantageously at least 55 million (5.5×10⁷) cfu of Pseudomonas monteilii/g soil activator composition, preferably at least 60 million (6.0×10⁷) cfu of Pseudomonas monteilii/g soil activator composition, more preferably at least 65 million (6.5×10⁷) cfu of Pseudomonas monteilii/g soil activator composition, even more preferably at least 70 million (7.0×10⁷) cfu of Pseudomonas monteilii/g soil activator composition, in particular at least 80 million (8.0×10⁷) cfu of Pseudomonas monteilii/g soil activator composition, more particular at least 90 million (9.0×10⁷) cfu of Pseudomonas monteilii/g soil activator composition, even more particular at least 100 million (1.0×10⁸) cfu of Pseudomonas monteilii/g soil activator composition, advantageously at least 200 million (2.0×10⁸) cfu of Pseudomonas monteilii/g soil activator composition, in particular at least 500 million (5.0×10⁸) cfu of Pseudomonas monteilii/g soil activator composition, advantageously at least 800 million (8.0×10⁸) cfu of Pseudomonas monteilii/g soil activator composition, preferably at least 1 billion (1.0×10⁹) cfu of Pseudomonas monteilii/g soil activator composition, advantageously at least 1.5 billion (1.5×10⁹) cfu of Pseudomonas monteilii/g soil activator composition, more advantageously at least 2.0 billion (2.0×10⁹) cfu of Pseudomonas monteilii/g soil activator composition.

11. Biofertilizer granule according to any one of claims 1 to 10, wherein the ratio of cfu of the one or more phosphorus solubilizing bacteria species/g soil activator composition to total cfu bacteria /g soil activator is at least 0.01, preferably at least 0.02, more preferably at least 0.06, preferably at least 0.1, preferably at least 0.25, preferably at least 0.6 measured according to ASTM-D5465-93 (dated 1998) standard, and/or presenting a relation of cfu of Pseudomonas monteilii to Bacillus subtilis defined as (cfu of Pseudomonas monteilii/cfu of Bacillus subtilis) multiplied by 100 of at least 0.01, preferably at least 0.02, preferably at least 0.04, preferably at least 0.10, preferably at least 0.20, preferably at least 0.30, preferably at least 0.5, preferably at least 0.6, preferably at least 0.70, preferably at least 0.8, preferably at least 1.0, preferably at least 1.5, preferably at least 2.0, preferably at least 2.5, preferably at least 3.0, preferably at least 3.5, preferably at least 4.0, preferably at least 4.5, preferably at least 5.0, preferably at least 5.5, preferably at least 6.0, preferably at least 6.5, preferably at least 7.0, preferably at least 7.5, preferably at least 8.0.

12. Biofertilizer granule according to any one of claims 1 to 11, wherein said bacterial mixture of said soil activator composition of said coating contains at least 500 million (5.0×10⁸) cfu total bacteria /g soil activator composition after said extended shelf life measured according to ASTM-D5465-93 (dated 1998) standard, preferably at least 700 million (7.0×10⁸) cfu total bacteria /g soil activator composition, more preferably at least 900 million (9.0×10⁸) cfu total bacteria /g soil activator composition, even more preferably at least 1 billion (1.0×10⁹) cfu total bacteria /g soil activator composition, advantageously at least 2 billion (2.0×10⁹) cfu total bacteria /g soil activator composition, more advantageously at least 3 billion (3.0×10⁹) cfu total bacteria /g soil activator composition, even more advantageously at least 4 billion (4.0×10⁹) cfu total bacteria /g soil activator composition, in particular at least 5 billion (5.0×10⁹) cfu total bacteria /g soil activator composition, more particular at least 6 billion (6.0×10⁹) cfu total bacteria /g soil activator composition, even more particular at least 7 billion (7.0×10⁹) cfu total bacteria /g soil activator composition, particularly at least 8 billion (8.0×10⁹) cfu total bacteria /g soil activator composition, more particularly at least 9 billion (9.0×10⁹) cfu total bacteria /g soil activator composition, even more particularly at least 10 billion (1.0×10¹⁰) cfu total bacteria /g soil activator composition, preferably at least 11 billion (1.1×10¹⁰) cfu total bacteria /g soil activator composition, advantageously at least 12 billion (1.2×10¹⁰) cfu total bacteria /g soil activator composition, more advantageously at least 13 billion (1.3×10¹⁰) cfu total bacteria /g soil activator composition, even more advantageously at least 14 billion (1.4×10¹⁰) cfu total bacteria /g soil activator composition, in particular at least 15 billion (1.5×10¹⁰) cfu total bacteria /g soil activator composition, more particular at least 16 billion (1.6×10¹⁰) cfu total bacteria /g soil activator composition, even more particular at least 17 billion (1.7×10¹⁰) cfu total bacteria /g soil activator composition, particularly at least 18 billion (1.8×10¹⁰) cfu total bacteria /g soil activator composition, more particularly at least 19 billion (1.9×10¹⁰) cfu total bacteria /g soil activator composition, even more particularly at least 20 billion (2.0×10¹⁰) cfu total bacteria /g soil activator composition, advantageously at least 25 billion (2.5×10¹⁰) cfu total bacteria /g soil activator composition, in particular at least 50 billion (5.0×10¹⁰) cfu total bacteria /g soil activator composition.

13. Biofertilizer granule according to any one of claims 1 to 12, wherein said soil activator composition of said coating comprises at least one additive, preferably said at least one additive is selected from the group comprising calcium-based compounds, such as CaO, phosphorus-based compounds, such as P₂O₅, magnesium-based compounds, such as MgO, potassium-based compounds, such as K₂O, nitrogen-based compounds, such as NH₄⁺, sulfur-based compounds, such as SO₄²⁻, and their mixture, preferably said nitrogen is present in an amount from 2 to 6 weight% based on the total weight of the soil activator composition, and/or in said soil activator composition of said coating phosphorus is present in an amount comprised between 0.15 and 0.4 equivalent P₂O₅ weight % based on the total weight of the soil activator composition, and/or in said soil activator composition of said coating potassium is present in an amount between 0.15 and 0.4 equivalent K₂O weight % based on the total weight of the soil activator composition, and/or in said soil activator composition of said coating sulphur is present in an amount comprised between 2 to 8 weight % based on the total weight of the soil activator composition, and/or in said soil activator composition of said coating calcium is present between 0.1 and 0.2 equivalent CaO weight % based on the total weight of the soil activator composition, and/or in said soil activator composition of said coating magnesium is present in an amount comprised between 0.05 and 0.1 equivalent MgO weight % based on the total weight of the soil activator composition.

14. Biofertilizer granule according to any one of claims 1 to 13, wherein said at least a binding agent of said coating is chosen from the group comprising mineral oil, water, vegetable oil, crude glycerin, and their mixture.

15. Method for preparing a biofertilizer granule according to any one of the claims 1 to 14, comprising the following steps:
- Preparing a bacterial mixture with lyophilized bacteria by dosing the one or more nitrogen fixing bacteria species to reach at least 2.55 billion (2.55×10⁹) cfu nitrogen fixing bacteria/g soil activator composition, measured according to ASTM-D5465-93 (dated 1998) standard and the one or more phosphorus solubilizing bacteria species to reach at least 2 billion (2×10⁹) cfu of phosphorus solubilizing bacteria /g soil activator composition measured according to ASTM-D5465-93 (dated 1998) standard, and
- Mixing said bacterial mixture with a lignosulfonate salt chosen amongst sodium lignosulfonate or calcium lignosulfonate to form said soil activator composition,
- Combining said soil activator composition with at least a fertilizer chosen in the group comprising inorganic fertilizer, organic fertilizers, biofertilizer, and their mixture, and at least a binding agent, either by mixing said soil activator composition with said at least binding agent and then blending said blend of binding agent and soil activator composition with the fertilizer, or by mixing the soil activator composition with the fertilizer and then adding said at least binding agent,
- Blending the mix for a predetermined period of time, preferably between 1 and 15 minutes, in particular between 1 and 10 minutes, more particular between 2 and 5 minutes, or until all fertilizer are evenly coated, to obtain said biofertilizer granule.
